# EUROPÄISCHE PATENTSCHRIFT

(11) **EP 2 024 711 B1**
(45) Veröffentlichungstag und Bekanntmachung des Hinweises auf die Patenterteilung: **02.11.2016**
(21) Anmeldenummer: 07723933.3
(22) Anmeldetag: 03.04.2007
(51) Int. Cl.: G01D 3/02, G01N 27/416, G01D 18/00

(54) **VERFAHREN ZUM KALIBRIEREN UND/ODER JUSTIEREN EINES SENSORS**
METHOD FOR CALIBRATING AND/OR ADJUSTING A SENSOR
PROCÉDÉ D'ÉTALONNAGE ET/OU DE RÉGLAGE D'UN CAPTEUR

(30) Priorität: 28.04.2006 DE 102006020480; 15.07.2006 DE 102006032905
(43) Veröffentlichungstag der Anmeldung: 18.02.2009
(60) Teilanmeldung: 12189426.5
(73) Patentinhaber: Endress + Hauser Conducta GmbH+Co. KG, 70839 Gerlingen (DE)
(72) Erfinder: BABEL, Wolfgang, 71263 Weil der Stadt (DE); WITTMER, Detlev, 75433 Maulbronn (DE)
(74) Vertreter: Andres, Angelika Maria
(86) Internationale Anmeldenummer: PCT/EP2007/002992
(87) Internationale Veröffentlichungsnummer: WO 2007/124834

(56) Entgegenhaltungen:
- EP-A- 0 283 704
- EP-A- 0 775 913
- WO-A1-96/12946
- WO-A1-2005/031339
- US-A- 5 918 191
- US-A1- 2005 054 905

## Beschreibung

Die Erfindung betrifft ein Verfahren zum Kalibrieren und/oder Justieren eines pH-Sensors.

In WO 2005/031339 A1 ist ein pH-Sensor beschrieben, der ein Sensormodul aufweist, das einen Messwertaufnehmer, z.B. eine Glaselektrode, eine analoge Signalverarbeitungseinheit zur Vorverarbeitung des analogen Messsignals, einen Analog/Digital-Wandler zur Wandlung des vorverarbeiteten analogen Messsignals in einen Digitalwert und einen Mikrocontroller zur Weiterverarbeitung des Digitalwerts umfasst. Das Sensormodul kann mit einem Sensormodulkopf steckbar verbunden werden. Der Sensormodulkopf ist über einen Kabelanschluss mit einem Feldbus verbindbar.

In US 5,918,191 ist ein System für das Datenmanagement in einem Kalibrierlabor für die Kalibrierung industrieller Messgeräte angegeben. Die Messgeräte können zur Verifizierung oder Kalibrierung in ein solches Kalibrierlabor gesendet werden.

Es sind elektrochemische Sensoren bekannt, die beispielsweise zur Überwachung der Produktion von Schwefelsäure eingesetzt werden. Damit ein derartiger Sensor korrekte Messwerte liefert, muss er kalibriert und/oder justiert werden. Unter dem Kalibrieren versteht man dabei üblicherweise das Feststellen einer Abweichung des von dem Sensor gemessenen Messwerts von dem tatsächlich korrekten Messwert und unter dem Justieren versteht man üblicherweise das Korrigieren des von dem Sensor gemessenen Messwerts auf den tatsächlich korrekten Messwert. Dieses Kalibrieren und/oder Justieren wird bei bekannten Sensoren dadurch bewerkstelligt, dass die Sensoren zuerst an ihrem Messort eingebaut werden, um dann am Messort kalibriert und/oder justiert zu werden. Ersichtlich ist eine derartige Vor-Ort Kalibrierung und/oder Justierung mit einem erheblichen Aufwand verbunden.

Weiterhin sind in einer derartigen Produktionsanlage meist eine Mehrzahl von Sensoren im Einsatz, wobei bei einem Defekt eines der Sensoren häufig ein sofortiger Ersatz des defekten Sensors erforderlich ist. Zu diesem Zweck werden meist eine Mehrzahl von neuen und/oder gebrauchten Sensoren gelagert, um einen schnellen Austausch zu gewährleisten. Diese Vielzahl der Sensoren, sowie die unterschiedlichen Typen der Sensoren birgt das Risiko, dass insbesondere bei einem sofort erforderlichen Austausch eines Sensors nicht der korrekte Ersatz-Sensor eingebaut wird, sondern beispielsweise ein fehlerhafter Sensor-Typ.

Aufgabe der Erfindung ist es, ein Verfahren zu schaffen, das die vorstehenden Nachteile und Probleme überwindet.

Diese Aufgabe wird erfindungsgemäß durch die Merkmale des Anspruchs 1 gelöst.

Vorteilhafte Weiterbildungen der Erfindung sind in den abhängigen Ansprüchen angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

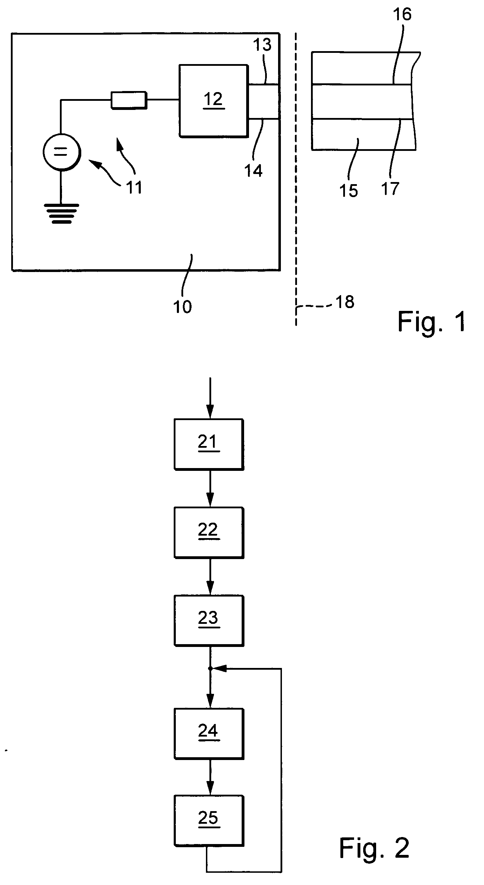

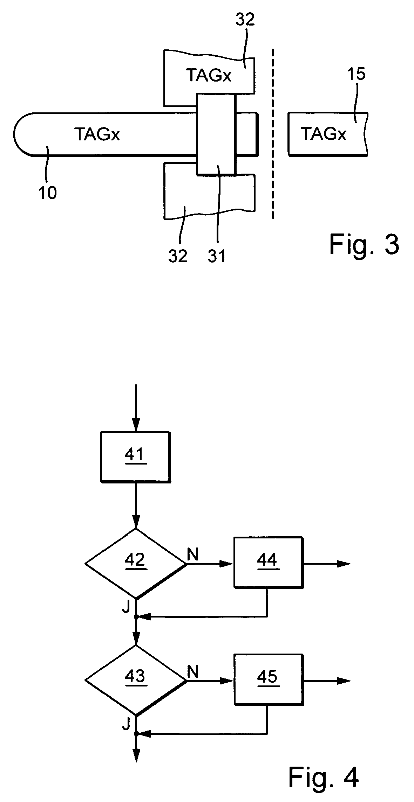

Figur 1 zeigt eine schematische Darstellung eines Ausführungsbeispiels eines erfindungsgemäßen Sensors, Figur 2 zeigt ein schematisches Blockschaltbild eines Ausführungsbeispiels eines Verfahrens zum Verwenden des Sensors der Figur 1, Figur 3 zeigt eine schematische Darstellung des Sensors der Figur 1 in einer zugehörigen Haltevorrichtung, und Figur 4 zeigt ein schematisches Blockschaltbild eines Ausführungsbeispiels eines Verfahrens zum Betreiben des Sensors der Figur 1.

In der Figur 1 ist ein Sensor 10 gezeigt, bei dem es sich um einen pH-Wert Sensorhandelt. Der Sensor 10 weist eine Messeinrichtung 11 auf, bei der es sich beispielsweise um eine pH-Glaselektrode handeln kann. Die Messeinrichtung 11 ist mit einer Auswerteelektronik 12 verbunden, bei der es sich beispielsweise um einen Mikroprozessor handeln kann.

Die Auswerteelektronik 12 ist dazu vorgesehen, das von der Messeinrichtung 11 erhaltene analoge elektrische Signal aufzubereiten und in ein digitales Signal umzuwandeln. Die Aufbereitung des analogen Signals kann unter anderem dessen Verstärkung umfassen. Weiterhin ist die Auswerteelektronik 12 dazu vorgesehen, das erhaltene digitale Signal zwischenzuspeichern.

Wesentlich ist, dass in der Auswerteelektronik 12 all diejenigen Funktionen und all diejenigen elektronischen Bauelemente enthalten sind, die einen wesentlichen Einfluss auf eine Kalibrierung und/oder Justierung des Sensors 10 haben. Dies wird noch näher erläutert werden.

Die Auswerteelektronik 12 ist mit mindestens zwei Leitungen 13, 14 verbunden. Über die erste Leitung 13 wird die Auswertelektronik 12 und gegebenenfalls auch die Messeinrichtung 11 mit elektrischer Energie versorgt. Über die zweite Leitung 14 werden digitale Signale in beide Richtungen von und zu der Auswerteelektronik 12 übertragen.

Der Sensor 10 kann über eine nicht-dargestellte Kupplung mit einem Kabel 15 verbunden werden. In dem Kabel 15 sind zwei Leitungen 16, 17 enthalten, die den beiden Leitungen 13, 14 des Sensors 10 zugeordnet sind. Die elektrische Verbindung der beiden Leitungen 16, 17 des Kabels 15 mit den beiden Leitungen 13, 14 des Sensors 10 kann beispielsweise induktiv erfolgen. Über das Kabel 15 kann der Sensor 10 beispielsweise mit einem Anzeigegerät und/oder einer weitergehenden Messwertverarbeitung verbunden werden. Z.B. kann das Kabel 15 über ein sogenanntes Common Data Interface (CDI) an einen USB-Port eines Personalcomputers angeschlossen sein.

Zwischen dem Sensor 10 und dem Kabel 15 ist eine Schnittstelle 18 vorhanden. Dort kann einerseits eine bestimmte elektrische Spannung fest vorgegeben sein, mit der der Sensor 10 mit elektrischer Energie versorgt wird. Andererseits können dort die Art und Weise der digitalen Signale fest vorgegeben sein, die zwischen dem Sensor 10 und dem Kabel 15 ausgetauscht werden.

Der Sensor 10 wird von einem Hersteller produziert und an einen Kunden ausgeliefert. Von dem Kunden kann der Sensor 10 in einer Anlage, beispielsweise in einer Anlage zur Produktion von Schwefelsäure, eingesetzt werden. Dort wird der Sensor 10 mit dem Kabel 15 verbunden, so dass die von dem Sensor 10 gemessenen Messwerte über das Kabel 15 beispielsweise angezeigt oder auf sonstige Weise z.B. von einem Personalcomputer weiterverarbeitet werden können.

In der Figur 2 ist ein Verfahren dargestellt, wie der Sensor 10 beim Kunden verwendet bzw. eingesetzt wird. Dabei wird in der nachfolgenden Beschreibung der Figur 2 davon ausgegangen, dass es sich bei dem Sensor 10 um einen neu hergestellten Sensor 10 handelt, der vom Hersteller an den Kunden ausgeliefert worden ist. Es wird aber darauf hingewiesen, dass das Verfahren der Figur 2 in entsprechender Weise auch auf einen Sensor anwendbar ist, der nicht neu ist, sondern der bereits in Gebrauch war.

In einem ersten Schritt 21 werden die Seriennummer des Sensors 10 sowie gegebenenfalls weitere Daten des Sensors 10 von Seiten des Kunden in einer Datenbank abgespeichert. Die Seriennummer stellt dabei eine eindeutige Identifizierung des aktuell vorliegenden Sensors 10 dar. Dieser erste Schritt 21 kann an einem beliebigen Ort und damit unabhängig vom Messort des Sensors 10 durchgeführt werden.

Danach wird in einem Schritt 22 eine TAG-Nummer dem aktuell vorliegenden Sensor 10 zugeordnet. Diese TAG-Nummer wird ebenfalls in der Datenbank abgespeichert, und zwar zugehörig zu dem aktuell vorliegenden Sensor 10. Auch dieser zweite Schritt 22 kann an einem beliebigen Ort und damit unabhängig vom Messort des Sensors 10 durchgeführt werden.

Die TAG-Nummer ist dabei eine Kennzeichnung für einen Messort, an dem der Sensor 10 eingesetzt werden darf. Als Beispiel kann die TAG-Nummer eine Kennzeichnung dafür sein, dass der Sensor 10 nur im Rahmen einer Schwefelsäureproduktion eingesetzt werden darf.

In einem nachfolgenden Schritt 23 wird der aktuell vorliegende Sensor 10 einer Kalibrierung und/oder Justierung unterzogen. Diese Kalibrierung und/oder Justierung erfolgt dabei nicht an dem an sich vorgesehenen Messort innerhalb der Anlage des Kunden. Die Kalibrierung und/oder Justierung erfolgt also in dem bereits erwähnten Beispielfall nicht innerhalb der Anlage zur Produktion von Schwefelsäure. Statt dessen kann die Kalibrierung und/oder Justierung an einem beliebigen anderen Ort erfolgen, also "irgendwo" völlig unabhängig von dem späteren Messort. Insbesondere kann die Kalibrierung und/oder Justierung des Sensors 10 in einem Labor erfolgen.

Diese Vorgehensweise der Kalibrierung und/oder Justierung des Sensors 10 "irgendwo" ist durch die Ausbildung des Sensors 10 gemäß Figur 1 möglich. Insbesondere durch die Ausbildung der Auswerteelektronik 12 dahingehend, dass möglichst alle, auf die Kalibrierung und/oder Justierung einwirkenden Einflüsse innerhalb der Auswerteelektronik 12 und damit innerhalb des Sensors 10 berücksichtigt werden, wird erreicht, dass das von dem Sensor 10 erzeugte Signal bei der nachfolgenden Übertragung im wesentlichen nicht mehr verfälscht werden kann. Diese Ausbildung des Sensors 10 stellt letztlich eine Ausbildung der gesamten "Messstrecke" innerhalb des Sensors 10 dar.

Der Sensor 10 gibt damit an der Schnittstelle 18 ein Signal ab, das durch die nachfolgende Übertragung im wesentlichen nicht mehr gestört und damit verändert werden kann. So haben die Kupplung und das nachfolgende Kabel 15 - wenn überhaupt - nur einen geringen Einfluss auf die übertragenen Signale. In jedem Fall ist dieser Einfluss so gering, dass eine Verfälschung der übertragenen Signale nicht stattfindet.

Handelt es sich bei dem von dem Sensor 10 erzeugten Signal - wie erläutert wurde - um ein digitales Signal, so können zusätzlich noch Algorithmen zur Fehlererkennung und/oder zur Fehlerkorrektur auf dieses digitale Signal angewendet werden.

Damit muss die dem Sensor 10 nachfolgende Übertragung bei der Kalibrierung und/oder Justierung des Sensors 10 nicht berücksichtigt werden. Durch die Unterbringung der gesamten "Messstrecke" innerhalb des Sensors 10 kann der Sensor 10 somit unabhängig von seinem späteren Einsatz, insbesondere unabhängig von dem späteren Messort, dem verwendeten Kabel 15 usw., kalibriert und/oder justiert werden.

Die Kalibrierung und/oder Justierung des Sensors 10 erfolgt also nicht vor Ort, sondern völlig unabhängig von dem späteren Einsatzort des Sensors 10.

Die bei der Kalibrierung und/oder Justierung des Sensors 10 erzeugten Kalibrierungsdaten werden zur weiteren Verwendung in dem Sensor 10 gespeichert. Gegebenenfalls können die Kalibrierungsdaten auch in der Datenbank des Kunden abgespeichert werden.

Es wird darauf hingewiesen, dass auch beim Hersteller bereits eine Kalibrierung und/oder Justierung des Sensors 10 durchgeführt werden kann. In diesem Fall kann der Kunde entweder - wie vorstehend erläutert - eine eigene, zusätzliche Kalibrierung und/oder Justierung durchführen, oder er kann die vom Hersteller vorgenommene Kalibrierung und/oder Justierung übernehmen. Im zweiten Fall kann diese Übernahme wiederum "irgendwo" erfolgen, also insbesondere völlig unabhängig von dem späteren Messort des Sensors 10.

Danach ist es möglich, dass der Sensor 10 über einen längeren Zeitraum beim Kunden gelagert wird. Es versteht sich, dass die Schritte 21, 22 und 23 auch vertauscht sein können.

Irgendwann kommt der Sensor 10 in einem Schritt 24 zum Einsatz. Die Art und Weise des Einbaus des Sensors 10 in die Anlage des Kunden wird dabei noch anhand der Figur 3 und 4 erläutert werden. Im eingebauten Zustand wird der Sensor 10 initialisiert und synchronisiert. Danach ist der Sensor 10 in der Lage, Messungen durchzuführen und die ermittelten Messwerte über das Kabel 15 weiterzugeben. Gegebenenfalls werden von dem Sensor 10 auch gemessene Werte gespeichert. Ebenfalls ist es möglich, dass der Sensor 10 eine Eigendiagnose oder dergleichen durchführt.

Nach einer vorgegebenen Betriebsdauer oder bei Auftreten eines Fehlers oder aus sonstigen Gründen wird der Sensor 10 in einem nachfolgenden Schritt 25 aus der Anlage entfernt. Es kann dann eine Reinigung und/oder Regenerierung des Sensors 10 erfolgen. Danach wird der Sensor 10 erneut kalibriert und/oder justiert. Diese erneute Kalibrierung und/oder Justierung kann dabei in entsprechender Weise durchgerührt werden, wie dies im Zusammenhang mit dem Schritt 23 bereits erläutert wurde. Die erneute Kalibrierung und/oder Justierung erfolgt damit wiederum außerhalb der Anlage, also "irgendwo", beispielsweise in einem Labor.

Danach wird die Verwendung des Sensors 10 mit dem Schritt 24 fortgesetzt. Der Sensor 10 wird also wieder in die Anlage des Kunden eingebaut und kommt dort wieder zum Einsatz.

Die beschriebene Abfolge der Schritte 24 und 25 kann dabei an sich beliebig wiederholt werden. Alle erzeugten Daten, insbesondere Kalibrierungsdaten, können dabei in der zugehörigen Datenbank des Kunden abgespeichert werden.

Wie erläutert wurde, darf der aktuell vorliegende Sensor 10 zum Beispiel nur in einer bestimmten Messumgebung zum Einsatz kommen. Damit soll gewährleistet werden, dass ein- und derselbe Sensor 10 beispielsweise immer nur im Rahmen der Schwefelsäureproduktion verwendet wird und nicht zwischendurch beispielsweise im Zusammenhang mit der Herstellung von Lebensmitteln zum Einsatz kommt. Wie ebenfalls erläutert wurde, ist zu diesem Zweck eine bestimmte TAG-Nummer dem aktuell vorliegenden Sensor 10 zugeordnet.

Anhand der Figur 3 wird nachfolgend erläutert, wie der aktuell vorliegende Sensor 10 in die Anlage des Kunden eingebaut wird. Hierzu ist in der Figur 3 der Sensor 10 und das Kabel 15 dargestellt, wie dies anhand der Fig. 1 beschrieben wurde. Weiterhin ist der Sensor 10 mit einem Halteteil 31 versehen, das beispielsweise ringartig ausgebildet ist. Diesem Halteteil 31 ist eine Haltevorrichtung 32 zugeordnet, die zur Fixierung des Sensors 10 vorgesehen ist. Die Haltevorrichtung 32, die häufig auch als Armatur bezeichnet wird, ist dabei derart an das Halteteil 31 angepasst, dass der Sensor 10 zusammen mit dem Halteteil 31 in die Haltevorrichtung 32 eingeführt bzw. eingesteckt werden kann, so dass danach der Sensor 10 mit dem Halteteil 31 fest innerhalb der Haltevorrichtung 32 fixiert ist. Damit kann der Sensor 10 mit Hilfe der Haltevorrichtung 32 fest innerhalb der Anlage des Kunden eingebaut werden.

Es wird angenommen, dass der aktuell vorliegende Sensor 10 die TAG-Nummer TAGx habe. Diese TAG-Nummer TAGx ist auf irgend eine Art und Weise sichtbar auf oder an dem Sensor 10 angebracht. Beispielsweise kann die TAG-Nummer auf den Sensor 10 aufgedruckt oder eingraviert sein. Ebenfalls kann ein Bauteil aus Kunststoff oder einem sonstigen Material vorgesehen sein, auf dem die TAG-Nummer aufgedruckt oder eingraviert ist, und das beispielsweise clipartig mit dem Sensor 10 verbunden ist. Alternativ kann das Bauteil auch fest und damit unverlierbar mit dem Sensor 10 verbunden sein. Weiterhin ist es möglich, dass der Sensor 10 mit einem RFID-Chip versehen ist, in dem die TAG-Nummer gespeichert ist (RFID = radio frequency identification). In diesem Fall kann die TAG-Nummer mit Hilfe eines entsprechenden Auslesegeräts sichtbar gemacht werden. Des weiteren ist es möglich, die elektrisch in dem Sensor 10 abgespeicherte TAG-Nummer mit Hilfe des Nahbereich-Datenfunks auszulesen, beispielsweise mit Hilfe der Bluetooth- oder der WLAN-Technik (WLAN = wireless local area network).

In entsprechender Weise ist auch auf derjenigen Haltevorrichtung 32 die TAG-Nummer TAGx sichtbar angebracht, in der der aktuell vorliegende Sensor 10 eingebaut werden soll. Da die TAG-Nummer - wie erläutert wurde - den Messort kennzeichnet, in dem ein bestimmter Sensor zum Einsatz kommen darf, kann die Haltevorrichtung 32 vorab mit der zugehörigen TAG-Nummer versehen werden. In dem erläuterten Beispielfall kann der Haltevorrichtung 32 diejenige TAG-Nummer zugeordnet werden, die einen Messort bei der Schwefelsäureproduktion kennzeichnet.

Entsprechend ist auch das Kabel 15 mit der TAG-Nummer TAGx versehen. Auch diese TAG-Nummer kann vorab auf dem Kabel 15 sichtbar angebracht werden, wie dies im Zusammenhang mit dem Sensor 10 erläutert worden ist.

Für den Einbau des Sensors 10 ist es nunmehr nur erforderlich, dass eine Bedienperson diejenige Haltevorrichtung 32 aus einer Mehrzahl von Haltevorrichtungen aufsucht, die dieselbe TAG-Nummer trägt wie der aktuell vorliegende Sensor 10. Dort kann die Bedienperson den Sensor 10 einbauen. Entsprechendes gilt für das Kabel 15. Auch insoweit ist es nur erforderlich, dass die Bedienperson das Kabel 15 mit derselben TAG-Nummer an den Sensor 10 anschliesst.

Umgekehrt ist es in gleicher Weise möglich, dass die Bedienperson denjenigen Sensor 10 aus einer Mehrzahl von Sensoren heraussucht, der dieselbe TAG-Nummer trägt wie eine bestimmte Haltevorrichtung 32. In diese Haltevorrichtung 32 kann die Bedienperson den zugehörigen Sensor 10 dann einbauen. Hinsichtlich des Kabels 15 ist es auch in diesem Fall nur erforderlich, dass die Bedienperson dasjenige Kabel 15 verwendet, das dieselbe TAG-Nummer trägt wie der Sensor 10.

Im zusammengebauten Zustand weisen dann der Sensor 10, das Kabel 15 und die Haltevorrichtung 32 dieselbe TAG-Nummer auf, wie dies in der Figur 3 anhand der TAG-Nummer TAGx gezeigt ist.

Mit Hilfe der TAG-Nummer wird damit gewährleistet, dass der Sensor 10 immer nur an demjenigen Messort eingesetzt wird, der dem jeweils vorliegenden Sensor 10 im Schritt 22 der Figur 2 zugeordnet worden ist. Ein fehlerhafter Einbau des Sensors 10 wird damit vermieden.

Sollte ein mit einer bestimmten TAG-Nummer versehener Sensor 10 nicht mit der TAG-Nummer des Messorts übereinstimmen, so kann dies daran erkannt werden, dass die TAG-Nummern des Sensors 10, der Haltevorrichtung 32 und des Kabels 15 nicht übereinstimmen. In diesem Fall kann dies beispielsweise zu einer Fehleranzeige am Sensor 10 selbst und/oder an einem über das Kabel 15 angeschlossenen Personalcomputer und/oder zu einer Sperrung des Sensors 10 oder der gesamten Messstelle führen.

Die bisherige Beschreibung war auf einen einzelnen Sensor 10 bezogen. Beispielsweise in einer Anlage zur Schwefelsäureproduktion sind jedoch eine Mehrzahl von Sensoren 10 vorhanden. Ebenfalls ist es häufig erforderlich, dass bei einem Defekt eines Sensors 10 möglichst unverzüglich ein Austausch gegen einen funktionsfähigen Sensor 10 erfolgen muss.

Der Kunde hat daher meist eine Anzahl von neuen Sensoren 10, wie auch eine Anzahl von gebrauchten Sensoren 10 gelagert.

Im Falle eines Defekts kann die Bedienperson den Messort des defekten Sensors 10 aufsuchen und dort die TAG-Nummer des defekten Sensors 10 bzw. der zugehörigen Haltevorrichtung 32 ablesen. Dann kann die Bedienperson aus den gelagerten neuen und/oder gebrauchten Sensoren denjenigen Sensor 10' aussuchen, der dieselbe TAG-Nummer trägt. Dieser Auswahlvorgang kann manuell mittels der aufgedruckten TAG-Nummem erfolgen oder mit Hilfe eines tragbaren Computers, der die TAG-Nummer aus dem RFID-Chip des defekten Sensors 10 ausliest und dann den zugehörigen Sensor 10' aus den gelagerten Sensoren automatisch auswählt. Dann kann die Bedienperson den defekten Sensor 10 gegen den funktionsfähigen Sensor 10' austauschen.

Entsprechendes gilt auch für den Ablauf der Figur 2. Auch dort kann nach dem Ausbau des Sensors 10 gemäß Schritt 25 sofort ein anderer Sensor 10' wieder in die Anlage eingebaut und gemäß Schritt 24 betrieben werden. Bei dem anderen Sensor 10' kann es sich dabei um einen neuen oder gebrauchten und gelagerten Sensor 10' handeln. Der ausgebaute Sensor 10 kann dann nach seiner erneuten Kalibrierung und/oder Justierung gemäß Schritt 25 gelagert werden, um dann später in Abhängigkeit von seiner TAG-Nummer innerhalb der Anlage wieder eingesetzt zu werden.

In der Figur 4 ist ein Verfahren dargestellt, mit dem der korrekte Einbau des Sensors 10 automatisch überprüft wird. Bei diesem Verfahren wird davon ausgegangen, dass im Schritt 22 der Figur 2 die TAG-Nummer des aktuell vorliegenden Sensors 10 nicht nur in der Datenbank des Kunden abgespeichert wird, sondern auch in dem Sensor 10 selbst.

Hierzu können, wie erläutert wurde, entsprechende Speicherelemente in dem Sensor 10 vorgesehen sein.

In einem Schritt 41 wird der Sensor 10 dadurch in die Anlage eingebaut, dass er in die Haltevorrichtung 32 eingesteckt und an das Kabel 15 angeschlossen wird. Es wird davon ausgegangen, dass der Haltevorrichtung 32 und dem Kabel 15 jeweils eine TAG-Nummer zugeordnet ist. Weiterhin wird davon ausgegangen, dass der Sensor 10 über das Kabel 15 mit einer weitergehenden Messwertverarbeitung, beispielsweise dem bereits erwähnten Personalcomputer, verbunden ist.

In einem Schritt 42 wird beispielsweise von der Messwertverarbeitung geprüft, ob in dem Sensor 10 eine TAG-Nummer abgespeichert ist.

Ist dies der Fall, so wird in einem Schritt 43 beispielsweise von der Messwertverarbeitung geprüft, ob die abgespeicherte TAG-Nummer mit einer erwarteten TAG-Nummer übereinstimmt. Unter der erwarteten TAG-Nummer wird diejenige TAG-Nummer verstanden, die aufgrund der verwendeten Haltevorrichtung 32 und/oder des verwendeten Kabels 15 an sich auch als TAG-Nummer dem Sensor 10 zugeordnet sein sollte. Letztlich wird also in dem Schritt 43 ein Vergleich zwischen der abgespeicherten TAG-Nummer des Sensors 10 und der TAG-Nummer der Haltevorrichtung 32 und/oder des Kabels 15 durchgeführt. Ergibt sich bei diesem Schritt ein Widerspruch zwischen den TAG-Nummern der Haltevorrichtung 32 und des Kabels 15, so wird eine nicht-dargestellte Fehlerroutine aufgerufen. Insbesondere kann eine Fehleranzeige oder eine Sperrung des Sensors 10 bzw. der gesamten Messstelle durchgeführt werden.

Stimmt die abgespeicherte TAG-Nummer mit der erwarteten TAG-Nummer überein, so bedeutet dies, dass der richtige Sensor 10 an das richtige Kabel 15 angeschlossen worden ist. Der Betrieb des Sensors 10 wird daraufhin fortgesetzt.

Wird in Schritt 42 festgestellt, dass keine TAG-Nummer in dem Sensor 10 abgespeichert ist, so kann der Bedienperson in einem Schritt 44 mitgeteilt werden, dass keine TAG-Nummer vorhanden ist, und dass deshalb zuerst der Schritt 22 der Figur 2 durchlaufen werden muss, bevor der Sensor 10 in der Anlage zum Einsatz kommen kann. Alternativ oder additiv kann in dem Schritt 44 vorgesehen sein, dass bei der Bedienperson abgefragt wird, ob im Rahmen des Verfahrens der Figur 3 eine TAG-Nummer in den Sensor 10 eingespeichert werden soll. Sofern dies bejaht wird, kann das Verfahren mit dem Schritt 43 fortgesetzt werden. In diesem Fall muss jedoch beachtet werden, dass die TAG-Nummer nur in dem Sensor 10 gespeichert ist, nicht jedoch in der Datenbank des Kunden.

Wird in dem Schritt 43 festgestellt, dass die abgespeicherte TAG-Nummer nicht mit der erwarteten TAG-Nummer übereinstimmt, so kann dies der Bedienperson in einem Schritt 45 mitgeteilt werden und das Verfahren der Figur 3 kann damit beendet werden. In diesem Fall ist es erforderlich, dass die Bedienperson einen anderen Sensor 10 zum Einsatz bringt. Alternativ oder additiv kann in dem Schritt 45 vorgesehen sein, dass die Bedienperson abgefragt wird, ob die abgespeicherte TAG-Nummer im Sensor 10 überschrieben werden soll. Wird dies bejaht, so kann das Verfahren der Figur 3 fortgesetzt werden. In diesem Fall stimmt die im Sensor 10 abgespeicherte TAG-Nummer jedoch nicht mehr mit der Datenbank des Kunden überein.

## Patentansprüche

1. Verfahren zum Kalibrieren und/oder Justieren eines an einem vorgesehenen Messort zu betreibenden pH-Sensors (10),
wobei der pH-Sensor (10) am Messort über eine Schnittstelle (18) und eine Kupplung mit einem Kabel (15) verbunden und über dieses mit einem Anzeigegerät und/oder einer weitergehenden Messwertverarbeitung verbunden ist, und wobei die vom pH-Sensor (10) gemessenen Messwerte über das Kabel (15) an das Anzeigegerät und/oder die weitere Messwertverarbeitung übertragen werden,
wobei der pH-Sensor (10) eine Messeinrichtung (11) und eine Auswerteelektronik (12) aufweist, die derart ausgebildet ist, dass das von dem Sensor (10) erzeugte Signal durch eine nachfolgende Übertragung im wesentlichen nicht veränderbar ist, derart, dass die Auswerteelektronik (12) dazu ausgestaltet ist, ein von der Messeinrichtung (11) erhaltenes analoges elektrisches Signal aufzubereiten und in ein digitales Signal umzuwandeln, wobei der pH-Sensor (10) das digitale Signal an die Schnittstelle (18) abgibt, und wobei die Auswerteelektronik (12) derart ausgebildet ist und die Kupplung und das Kabel (15) einen so geringen Einfluss auf das übertragene digitale Signal haben, dass das digitale Signal durch die nachfolgende Übertragung nicht mehr verfälscht werden kann, und
wobei der pH-Sensor (10) an einem anderen Ort als dem Messort kalibriert und/oder justiert wird (23, 25),
und wobei dem pH-Sensor (10) eine TAG-Nummer zugeordnet wird (22), die den Messort kennzeichnet, und
wobei vor dem Kalibrieren und/oder Justieren die Seriennummer des pH-Sensors (10) in einer Datenbank abgespeichert wird und dem pH-Sensor (10) die TAG-Nummer zugeordnet wird und ebenfalls in der Datenbank und in dem pH-Sensor (10) abgespeichert wird, und
wobei die bei der Kalibrierung und/oder Justierung des pH-Sensors (10) erzeugten Kalibrierungsdaten zur weiteren Verwendung in dem pH-Sensor (10) und in der Datenbank gespeichert werden.

2. Verfahren nach Anspruch 1,
**dadurch gekennzeichnet, dass** der pH-Sensor (10) in einem Labor kalibriert und/oder justiert wird.

3. Verfahren nach Anspruch 1 oder 2,
**dadurch gekennzeichnet, dass** der pH-Sensor (10) vor einem Einbau an dem späteren Messort kalibriert und/oder justiert wird.

4. Verfahren nach Anspruch 1,
**dadurch gekennzeichnet, dass** der pH-Sensor (10) mit einem RFID-Chip versehen ist, in dem die TAG-Nummer abgespeichert wird.

5. Verfahren nach Anspruch 1,
**dadurch gekennzeichnet, dass** der pH-Sensor (10) über ein Kabel (15) mit einem Dateninterface an einen USB-port eines Personalcomputers angeschlossen wird.

6. Verfahren nach Anspruch 1,
**dadurch gekennzeichnet, dass** beim Einbau des pH-Sensors (10) am Messort die TAG-Nummer in dem pH-Sensor (10) abgespeichert ist, und mit Hilfe des Nahbereich-Datenfunks ausgelesen wird, beispielsweise mit Hilfe der bluetooth- oder der WLAN-Technik.

7. Verfahren nach Anspruch 1,
**dadurch gekennzeichnet, dass** der korrekte Einbau des pH-Sensors (10) am Messort automatisch überprüft wird, wobei die TAG-Nummer des pH-Sensors (10) in der Datenbank und in dem pH-Sensor (10) selbst abgespeichert ist,
und wobei der pH-Sensor (10) an dem Messort innerhalb einer Anlage eingebaut wird, indem er in eine Haltevorrichtung (32) eingesteckt und an das Kabel (15) angeschlossen wird und über das Kabel (15) mit einer Messwertverarbeitung verbunden wird,
wobei in einem ersten Schritt (42) von der Messwertverarbeitung geprüft wird, ob in dem pH-Sensor (10) eine TAG-Nummer abgespeichert ist,
wobei, wenn dies der Fall ist, in einem zweiten Schritt (43) geprüft wird, ob die abgespeicherte TAG-Nummer mit einer erwarteten TAG-Nummer übereinstimmt, wobei die erwartete TAG-Nummer diejenige TAG-Nummer ist, die aufgrund der verwendeten Haltevorrichtung (32) und/oder des verwendeten Kabels (15) auch als TAG-Nummer dem pH-Sensor (10) zugeordnet sein sollte,
und wobei, wenn sich bei diesem Vergleich ein Widerspruch zu den TAG-Nummem der Haltevorrichtung (32) und/oder des Kabels (15) ergibt, eine Fehlerroutine aufgerufen wird,
und wobei, wenn die abgespeicherte TAG-Nummer mit der erwarteten TAG-Nummer übereinstimmt, der Betrieb des pH-Sensors (10) fortgesetzt wird.

## Claims

1. Procedure designed to calibrate and/or adjust a pH sensor to be operated at an intended place of measurement,
wherein the pH sensor (10) is connected at the place of measurement to a cable (15) via an interface (18) and is connected via said cable to a display unit and/or another measured value processing unit, and wherein the measured values measured by the pH sensor (10) are transmitted via the cable (15) to the display unit and/or the other measured value processing unit,
wherein the pH sensor (10) has a measuring system (11) and evaluation electronics (12), which are designed in such a way that the signal generated by the sensor (10) cannot essentially be changed by a subsequent transmission, in such a way that the evaluation electronics (12) are designed to preprocess an analog electrical signal received from the measuring system (11) and to convert said signal into a digital signal, wherein the pH sensor (10) delivers the digital signal to the interface (18), and wherein the evaluation electronics (12) are designed in such a way and the coupling and the cable (15) have such a minor influence on the transmitted digital signal that the digital signal can no longer be corrupted by the subsequent transmission,
and
wherein the pH sensor (10) is calibrated and/or adjusted (23, 25) at a place other than the place of measurement,
and wherein the pH sensor (10) is assigned a TAG number (22) which identifies the place of measurement, and
wherein the serial number of the pH sensor (10) is saved in a database prior to the calibration and/or adjustment and the TAG number is assigned to the pH sensor and is also saved in the database and in the pH sensor (10), and wherein the calibration data generated during the calibration and/or adjustment of the pH sensor (10) are saved in the pH sensor (10) and in the database for further use.

2. Procedure as claimed in Claim 1,
**characterized in that** the pH sensor (10) is calibrated and/or adjusted in a laboratory.

3. Procedure as claimed in Claim 1 or 2,
**characterized in that** the pH sensor (10) is calibrated/adjusted before installation at the later place of measurement.

4. Procedure as claimed in Claim 1,
**characterized in that** the pH sensor (10) is fitted with an RFID chip on which the TAG number is saved.

5. Procedure as claimed in Claim 1,
**characterized in that** the pH sensor (10) is connected to an USB port of a personal computer via a cable (15) with a data interface.

6. Procedure as claimed in Claim 1,
**characterized in that** when the pH sensor (10) is installed at the place of measurement, the TAG number is saved in the pH sensor (10) and is read out using short-range wireless technology, such as Bluetooth or WLAN technology.

7. Procedure as claimed in Claim 1,
**characterized in that** the correct installation of the pH sensor (10) at the place of measurement is checked automatically, the TAG number of the pH sensor (10) being saved in the database and in the pH sensor (10) itself,
and wherein, at the place of measurement, the pH sensor (10) is mounted within a system by being inserted into a retaining unit (32) and connected to the cable (15) and by being connected to a measured value processing unit via the cable (15),
wherein in a first step the measured value processing unit checks whether a TAG number is saved in the pH sensor (10),
wherein, if this is the case, in a second step a check is performed to determine whether the saved TAG number matches an anticipated TAG number, wherein the anticipated TAG number is the TAG number which should be assigned as the TAG number to the pH sensor (10) due to the retaining unit used (32) and/or the cable (15) used,
and wherein an error routine is launched if this comparison discovers an inconsistency with regard to the TAG numbers of the retaining unit (32) and/or the cable (15),
and wherein the operation of the pH sensor (10) is continued if the saved TAG number matches the anticipated TAG number.

## Revendications

1. Procédé destiné à l'étalonnage et/ou au réglage d'un capteur de pH (10) exploité sur un emplacement de mesure prévu,
pour lequel le capteur de pH (10) est relié sur l'emplacement de mesure par l'intermédiaire d'une interface (18) et d'un connecteur femelle avec un câble (15), et est relié par l'intermédiaire de ce dernier avec un appareil d'affichage et/ou un autre dispositif de traitement des valeurs mesurées, et pour lequel les valeurs mesurées par le capteur de pH (10) sont transmises par l'intermédiaire du câble (15) à l'appareil d'affichage et/ou au dispositif de traitement des valeurs mesurées,
pour lequel le capteur de pH (10) comporte un dispositif de mesure (11) et une électronique d'exploitation (12), qui sont conçus de telle sorte que le signal généré par le capteur (10) ne peut pour l'essentiel pas être modifié par une transmission subséquente, de telle sorte que l'électronique d'exploitation (12) est conçue de telle manière à mettre en forme un signal électrique analogique reçu par le dispositif de mesure (11) et à le convertir en un signal numérique, le capteur de pH (10) délivrant le signal numérique à l'interface (18), et l'électronique d'exploitation (12) étant conçue et le connecteur femelle et le câble (15) ayant une influence tellement faible sur le signal numérique transmis de sorte que le signal numérique ne peut plus être faussé par la transmission subséquente,
et
pour lequel le capteur de pH (10) est étalonné et/ou réglé (23, 25) en un autre emplacement que l'emplacement de mesure,
et pour lequel le capteur de pH (10) se voit attribuer un numéro TAG (22), qui caractérise l'emplacement de mesure, et
pour lequel est enregistré, avant l'étalonnage et/ou le réglage, le numéro de série du capteur de pH (10) dans une base de données et le capteur de pH (10) se voit attribuer le numéro TAG et est également enregistré dans la base de données et dans le capteur de pH (10), et pour lequel les données d'étalonnage générées lors de l'étalonnage et/ou du réglage du capteur de pH (10) sont enregistrées dans le capteur de pH (10) et dans la base de données, pour une utilisation ultérieure

2. Procédé selon la revendication 1,
**caractérisé en ce que** le capteur de pH (10) est étalonné et/ou réglé dans un laboratoire.

3. Procédé selon la revendication 1 ou 2,
**caractérisé en ce que** le capteur de pH (10) est étalonné et/ou réglé avant un montage sur l'emplacement de mesure ultérieur.

4. Procédé selon la revendication 1,
**caractérisé en ce que** le capteur de pH (10) est muni d'une puce RFID, dans laquelle est enregistré le numéro TAG.

5. Procédé selon la revendication 1,
**caractérisé en ce que** le capteur de pH (10) est raccordé par l'intermédiaire d'un câble (15) avec une interface de données à un port USB d'un ordinateur personnel.

6. Procédé selon la revendication 1,
**caractérisé en ce que**, lors du montage du capteur de pH (10) sur l'emplacement de mesure, le numéro TAG est enregistré dans le capteur de pH (10), et est lu à l'aide de la radiotransmission de données de faible portée, par exemple à l'aide de la technologie Bluetooth ou sans fil.

7. Procédé selon la revendication 1,
**caractérisé en ce que** le montage correct du capteur de pH (10) sur l'emplacement de mesure est contrôlé automatiquement, le numéro TAG du capteur de pH (10) étant enregistré dans la base de données et dans le capteur de pH (10) lui-même,
et procédé pour lequel le capteur de pH (10) est monté sur l'emplacement de mesure au sein d'une installation, **en ce qu'**il est inséré dans un dispositif de retenue (32) et est raccordé au câble (15) et relié à un dispositif de traitement des valeurs mesurées par l'intermédiaire du câble (15),
procédé pour lequel l'on contrôle dans une première étape (42) par le dispositif de traitement des valeurs mesurées, si un numéro TAG est enregistré dans le capteur de pH (10),
procédé pour lequel, lorsque c'est le cas, l'on contrôle dans une deuxième étape (43) si le numéro TAG enregistré coïncide avec un numéro TAG attendu, le numéro TAG attendu étant le numéro TAG qui devrait être affecté également en tant que numéro TAG au capteur de pH (10) en raison du dispositif de retenue (32) utilisé et/ou du câble (15) utilisé,
et procédé pour lequel, lorsqu'il résulte de cette comparaison une contradiction par rapport aux numéros TAG du dispositif de retenue (32) et/ou du câble (15), une routine d'erreur est appelée, et procédé pour lequel, lorsque le numéro TAG enregistré coïncide avec le numéro TAG attendu, le fonctionnement du capteur de pH (10) est poursuivi.
